Europäisches Patentamt

(19) European Patent Office

Office européen des brevets

(11) Publication number : **0 313 572 B1**

(12) **EUROPEAN PATENT SPECIFICATION**

(45) Date of publication of patent specification :
15.04.92 Bulletin 92/16

(51) Int. Cl.⁵ : **C04B 35/64**

(21) Application number : **87904650.6**

(22) Date of filing : **07.07.87**

(86) International application number :
**PCT/SE87/00325**

(87) International publication number :
**WO 88/00577 28.01.88 Gazette 88/03**

(54) **PROCESS FOR SURFACE MODIFICATION OF OXIDIC AND NONOXIDIC CERAMIC RAW MATERIALS.**

(30) Priority : **10.07.86 SE 8603074**

(43) Date of publication of application :
**03.05.89 Bulletin 89/18**

(45) Publication of the grant of the patent :
**15.04.92 Bulletin 92/16**

(84) Designated Contracting States :
**AT BE CH DE FR GB IT LI LU NL SE**

(56) References cited :
**US-A- 3 811 899**

(73) Proprietor : **SVENSKA
SILIKATFORSKNINGSINSTITUTET
Box 5403
S-402 29 Göteborg (SE)**

(72) Inventor : **PERSSON, Michael
Svenska Silikatforskningsinstitutet
Box 5403 S-402 29 Göteborg (SE)**

(74) Representative : **Wiklund, Erik et al
AWAPATENT AB Box 5117
S-200 71 Malmö (SE)**

## Description

In producing, by sintering, high performance ceramics having high strength and fine-grained microstructure, use is made of raw materials which consist wholly or partly of submicron particles. Submicron particles, i.e. particles smaller than 1 micrometer, are agglomerated spontaneously due to attractive van der Waals forces. If no action is taken to prevent agglomeration in the production of ceramics in the different process and/or forming steps (such as dispersion, wetting, spray-drying, slip casting, tape casting, etc.), the advantage of using submicron particles has mainly disappeared. The particles, i.e. the agglomerates, will then cause major inhomogeneities in the microstructure. In particle suspensions, where particles are dispersed in a liquid, a polymer melt, a wax melt or similar dispersion medium, the particles may be separated from one another by controlling their mutual interaction. The attractive van der Waals forces may be counteracted by repulsive forces caused by electrostatic, steric or electrosteric interaction. For example, ceramic particles can usually be stabilised electrostatically in water by pH adjustment. In this manner, high charges, so-called zeta potentials, are generated on the particles, and these charges cause strong repulsive forces, whereby the agglomerates can be dispersed. Steric or electrosteric stability is obtainable by adding different surfactants (dispersing agents, deflocculating agents, wetting agents, peptising agents, protective colloids, polyelectrolytes, anionic, cationic or nonionic surfactant), and in this manner higher suspension stability against flocculation and sedimentation is obtainable, often at pH-values not as extreme as those obtained upon electrostatic stabilisation.

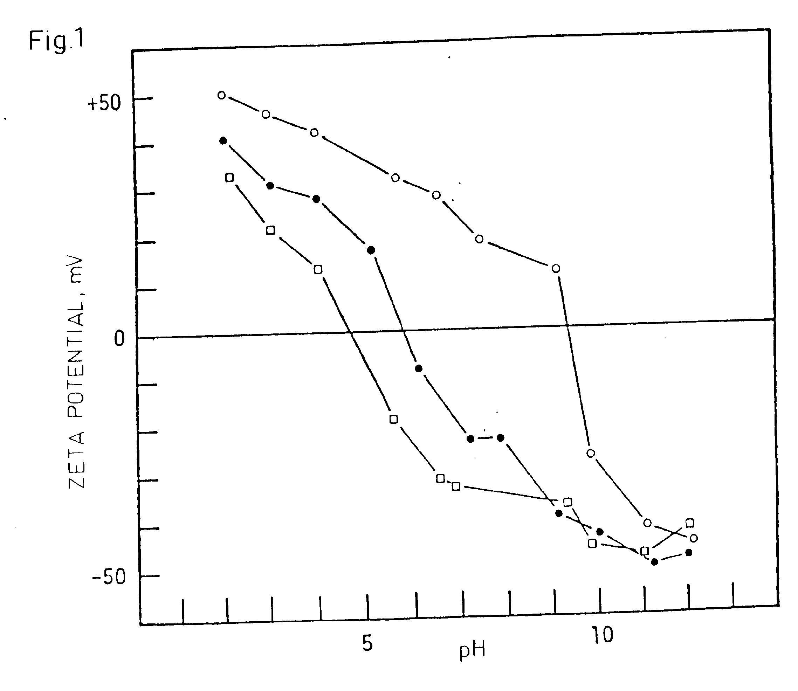

A major problem in developing new surface-active agents for ceramic raw materials is that different ceramic raw materials have entirely different charges, zeta potentials, at the same pH, even when the ceramic and crystallographic composition is identical; see Fig. 1. These charge differences imply that, when electrostatic stabilisation is employed, but a few raw materials can be mixed in the same liquid, if it is desired to obtain a stable suspension. If steric or electrosteric stabilisation is used, it is necessary, at worst, to develop for each ceramic raw material a specific surface-active substance.

The present invention relates to a process for surface modification of oxidic and nonoxidic ceramic raw materials. The invention aims at providing, by surface modification of the raw materials, particle surfaces which, from the surface-chemical viewpoint, are highly similar. This applies primarily to the pH range within which the particles charges are changed from positive to negative, i.e. the so-called isoelectric point. This is achieved by reacting, in a special process step, ceramic powder raw material, organic solvent of low water content and metal alkoxide, as is described in the Examples below, and subsequently either evaporatin, the solvent and calcining the remaining powder, or by hydrolysing the remaining metal alkoxide, followed by drying and calcination. This technique imparts to the powder particle surfaces novel surface chemical properties in that they act against dispersing agents, deflocculatins agents, binders and other types of processing aids, as surfaces similar to those of a corresponding metal oxide, oxyhydroxide or hydroxide powder.

The above-mentioned surface modification thus implies that different ceramic raw materials will obtain, in surface-chemical respect, similar dispersing characteristics. For example, water-based suspensions of $Si$, $SiC$, $Si_3N_4$, $ZrO_2$ will all obtain positive zeta potentials at pH below 8 and negative zeta potentials at pH higher than 9 when treated with Al alkoxide. In other dispersing media, such as organic or inorganic liquids and polymer or wax melts, or mixtures thereof, the surface modification according to the present invention opens up possibilities of facilitating the selection of surface-active processing aids, such as wetting agents, dispersing agents, binders etc., and also the possibility of stabilising mixtures of different ceramic raw materials by electrostatic stabilisation. It is, however, a condition that the same metal in the alkoxide used can be accepted as an additive in low contents in many ceramic systems. Examples of such metal alkoxides are Al alkoxide and Si alkoxide. One example of an alkoxide having a high potential as a surface modifier is Al alkoxide since it can be hydrolysed and/or calcined and thus converted into $Al_2O_3$ or Al-O-OH. $Al_2O_3$ may occur in most ceramic systems based upon $Si$, $SiC$, $Si_3N_4$, (SiAlONs), $ZrO_2$. Since surface modification causes different ceramic raw materials to behave similarly in respect of surface charge and adsorption, it is possible homogeneously to mix composite systems, i.e. completely randomly. By composite system is here meant a mixture comprising at least two raw materials which are different from the viewpoint of composition or crystallographic modification. For example, $ZrO_2$ and $Si_3N_4$ can be dispersed simultaneously solely by pH adjustment, even though both powders have widely different zero charge points prior to surface modification according to the present invention.

Metal alkoxides, especially Al alkoxide, such as aluminium isopropoxide, are described in literature in many ceramic contexts, or for surface coating. The following examples are given.

1. Kishi et al (A) describe how Al isopropoxide is used as a method of adding $Al_2O_3$ to a β-sialon system, thereby to obtain a more advantageous microstructure after sintering.

2. A number of papers and patents proceed from metal alkoxides and produce fine-grained and reactive powders suitable for sintering (B-I not C).

3. Al alkoxides are frequently used for surface coating of substrates in the electronics industry in order to obtain suitable thermal and electric properties. Surface coating often is performed by chemical vapour deposition, CVD (J, K). The method can also be carried out as a pyrolytic deposition (L).

4. (M) exemplifies the surface coating of oxidic substrates by immersion in a solution consisting of Si alkoxide, ethanol, water and hydrochloric acid, whereby extremely thin layers are obtainable.

5. (N) uses int. al. Al isopropoxide as an Al source in the hot pressing of boron carbides and nitrides to prevent grain growth. After heat treatment to decompose the alkoxide to the corresponding oxide, the mixture is ball milled, which would destroy any oxide layer on the grains.

6. (O) uses Al isopropoxide for the production of aluminium alkoxide carboxyl sulphonates which in turn are used as dispersing agents for hydrophobic fillers and pigments.

In the accompanying drawings, Figs. 1-4 show the zeta potential as a function of the pH of different materials. In Fig. 1, □ represents $Si_3N_4$ (KemaNord, P95M), ● represents $Si_3N_4$ (UBE, E10), and o represents $Si_3N_4$ (HC Starck, LC12). In Fig. 2, o represents SiC (Lonza, UF 15) prior to modification, and ● represents SiC (Lonza, UF 15) after modification (see Example 1). Fig. 3 shows the zeta potential as a function of the pH of $\alpha$-$Al_2O_3$ (Alcoa, A-16SG) (see Example 1). In Fig. 4, o shows the zeta potential as a function of the pH of Si after surface modification (see Example 2), and ● shows the zeta potential as a function of the pH of a mixture of Si and $Si_3N_4$ to which $Y_2O_3$ and $Al_2O_3$ have been added, after surface modification (see Example 3).

The Examples below illustrate the effect of surface modification of different ceramic raw materials according to the present invention. These Examples are concerned with slip casting which is the forming technique in which modification of the powder surface according to the present invention is highly useful. However, slip casting constitutes no restriction to this method of modifying a powder surface, and other forming techniques, such as injection moulding, Pressing, compression moulding, extrusion or variants thereof, may utilise surface modification as a process step in order to achieve lower viscosity, higher flowability or other desired characteristics of the powder material mixed with suitable forming and processing aids.

As pointed out in Example 1, below, it is important that the surface-modified powder is dispersed without destroying the surface layer. In the present case, dispersion is performed by agitation by means of a stirrer. If dispersing is performed in e.g. a ball mill, the surface modification will be destroyed.

The following Examples indicate the addition of different contents of Al isopropoxide to different ceramic powders. As will appear, about 4% Al isopropoxide were sufficient for the surface modification, regardless of the fact that different powders (difierent particle size distributions/specific surfaces) were used. An addition of 4% Al isopropoxide, which corresponds to an increase of the Al content by about 0.5 %-units, is an addition in which, depending upon the ceramic- powder, varying proportions of the added Al isopropoxide are unreacted because no washing operation has occurred after the surface modification step, which can reduce the requisite amount of Al isopropoxide. In other words, the Al isopropoxide content of interest lies primarily within the range < 4%.

Example 1

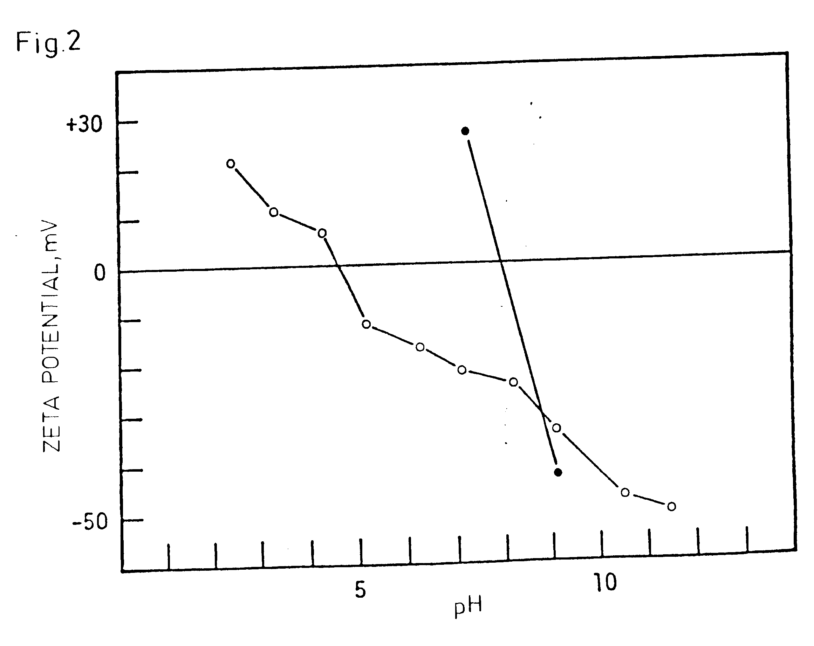

Surface modification of $\alpha$-SiC. To modify $\alpha$-SiC (UF15, Lonza), use is made of 3.8% by weight, 7.6% and 15.2% Al isopropoxide, based on the amount of SiC. In three beakers containing n-hexane, three different amounts of the Al isopropoxide powder were mixed by means of a high-speed stirrer of the ultraturax type. SiC was admixed and stirred for about 5 min, before dispersion was continued in a ball mill for about 2 hours. After dispersion, the slip was evaporated to dryness and finally dried/heat-treated for at least 30 min at 120°C in a heat cabinet. The zeta potential as a function of the pH was measured in $H_2O$ for the original powder and the three surface-modified powders. This is illustrated in Fig. 2 which shows especially where the zeta potentials change their sign from positive to negative.

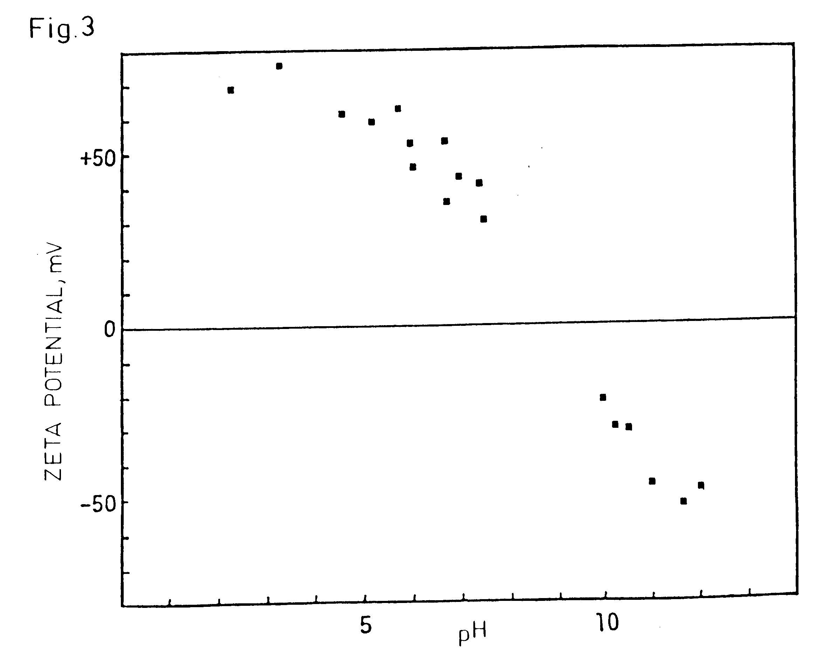

The results should also be compared with Fig. 3 which illustrates the zeta potential of $\alpha$-$Al_2O_3$ (Alcoa, A-16SG) as a function of the pH. The following conclusions can be drawn from the results: (1) the SiC particles exhibit surfaces which, from the zeta potential point of view, resemble those of $\alpha$-$Al_2O_3$; and (2) relatively small amounts of Al isopropoxide are required to modify $\alpha$-SiC, even if the specific surface of the powder is about 15 m²/g. The amounts of Al isopropoxide added in this Example are believed to contribute about 0.5%, 1.0% and 2% Al. The surface-modified powders were dispersed in water merely by stirring and adding 1% Dispex A40 (commercial dispersing agent consisting of $NH_4^+$-polyacrylates), slip-cast to rods, and dried without formation of cracks or the like.

Example 2

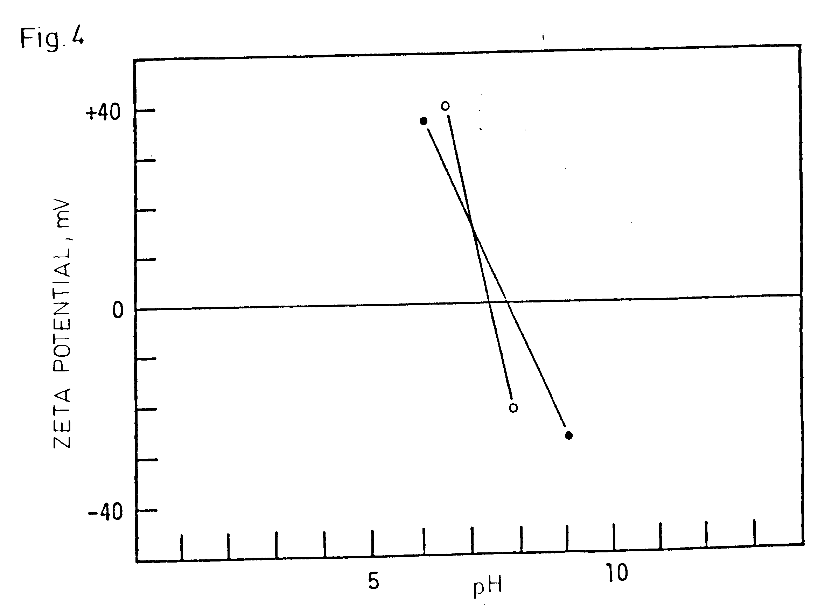

In this Example, the same procedure as in Example 1 was used, except that SiC had been replaced by Si, and that the amount of Al isopropoxide was 4%, based on the amount of Si. Furthermore, the milling time was 1.75 hours, and the heat treatment time 2 hours. Fig. 4 illustrates the zeta potential after surface modification of Si (Sicomill, Grade IV, KemaNord). The powder was then slip-cast to rods by means of Dispex A40 as dispersing agent. After drying, no cracks could be observed in the rods. It should be pointed out that the slip with surface-modified Si showed no gas formation, which otherwise is usual and a considerable problem in slip-casting of Si dispersed in water.

Example 3

Example 3 used the same procedure as in Example 2, except that Si had been replaced by the mixture $Si/Si_3N_4$ to which 6% $Y_2O_3$ and 2% $Al_2O_3$ had been added. The powder mixture employed was blended and milled for 111 hours, whereby the Si fraction will be extremely fine-grained. After surface modification, the powder was dispersed and slip-cast to rods, as above. In spite of the very fine-grained Si fraction, also in this case no major gas formation in the water occurred. Fig. 4 shows the zeta potential as a function of pH for surface-modified powder mixture.

Example 4

In Example 4, $ZrO_2$ (Toyo Soda TZ-34) was surface-modified with about 9% Al isopropoxide. After surface modification, the powder could be slip-cast into crack-free rods, as above.

References

(A) K. Kishi, S. Umebayashi and K. Kobayashi, Yogyo Kyokai Shi 94 (1) (1986) 189
(B) K.S. Mazdiyasni, "Metalakoxy-derived powders", Sagamore Army Mater. Res. Conf., Proc. ('85), Vol. 30.
(C) EU Pat. Appln. 0,055,459
(D) K.D. Fritsche, Freib. Forsch. -H, A657 (1983) 11
(E) B. Mirhadi, H. Hausner, Ber. DKG 2 (1985) 86
(F) M. Mitomo, T. Shiogai, H. Yoshimatsu and Y. Kitami, Yogyo Kyokai Shi 93 (7) (1985) 34
(G) Y. Hirata, K. Sakeda, Y. Matsushita and K. Shimada, dito, 93 (9) (1985) 101
(H) B. Fegley, P. White and H.K. Bowen, J. Am. Ceram. Soc., 68 (2) (1985) C-60
(I) dito authors, Am. Ceram. Bull. 64 (8) (1985) 1115
(J) Ger. (DDR) Offenl. 2,354,435
(K) K.J. Sladek and W.W. Gibert, Proc. 3rd Int. Conf. Chem. Vap. Dep., ed. F.A. Glaski, (1972) 215
(L) J.A. Aboaf, J. Electrochem. Soc. 114 (9) (1967) 948
(M) S. Sakka, K. Kamiya, K. Makita and Y. Yamamoto, J. Non-Cryst. Sol. 63 (1984) 223
(N) Ger. Offenl. 2,234,653
(O) JP 82 20 5431

Claims

1. Process for surface modification of oxidic and nonoxidic ceramic raw materials or mixtures thereof in conjunction with conventional powder materials forming techniques in which the ceramic powder raw material is allowed to react with a metal alkoxide in the presence of an organic solvent of low water content, whereupon either the solvent is evaporated and the powder raw material is calcined, or the remaining metal alkoxide is hydrolysed and the powder raw material is dried and calcined, **characterised** in that the powder raw material thus surface-modified is dispersed and formed while maintaining the surface-modified surface intact.

2. A process as claimed in claim 1, **characterised** in that the isoelectric point of the surface-modified raw material lies between the value of the original raw material and the value of the corresponding metal oxide, metal oxide hydroxide or metal hydroxide of the selected metal alkoxide.

3. A process as claimed in claims 1 and 2, **characterised** in that the metal alkoxide is a silicon alkoxide or an aluminium alkoxide.

4. A process as claimed in claims 1-3, **characterised** in that the aluminium alkoxide is an isopropoxide.

5. A process as claimed in claims 1-4, **characterised** in that the aluminium alkoxide is an isopropoxide, and that the dispersing agent during a mixing/dispersing step carried out after surface modification is a polyacrylate.

Patentansprüche

1. Verfahren zur Oberflächenmodifizierung von oxidischen und nichtoxidischen, keramischen Rohmaterialien oder Mischungen davon in Verbindung mit herkömmlichen Verfahren zum Formen von pulverförmigen Materialien, bei welchen Verfahren das keramische, pulverförmige Rohmaterial mit einem Metallalkoxid in Gegenwart eines organischen Lösungsmittels mit niedrigem Wassergehalt reagiert wird, wonach entweder das Lösungsmittel eingedampft und das pulverförmige Rohmaterial kalziniert wird, oder das restliche Metallalkoxid hydrolysiert und das pulverförmige Rohmaterial getrocknet und kalziniert wird, dadurch **gekennzeichnet**, dass das somit oberflächenmodifizierte, pulverförmige Rohmaterial dispergiert und geformt wird, während die oberflächenmodifizierte Oberfläche intakt behalten wird.

2. Verfahren nach Anspruch 1, dadurch **gekenn-**

**zeichnet**, dass der isoelektrische Punkt des oberflächenmodifizierten Rohmaterials zwischen dem Wert des ursprünglichen Rohmaterials und dem Wert des entsprechenden Metalloxids, Metalloxidhydroxids oder Metallhydroxids des gewählten Metallalkoxids liegt.

3. Verfahren nach den Ansprüchen 1 und 2, dadurch **gekennzeichnet**, dass das Metallalkoxid ein Silikonalkoxid oder ein Aluminiumalkoxid ist.

4. Verfahren nach den Ansprüchen 1-3, dadurch **gekennzeichnet**, dass das Aluminiumalkoxid ein Isopropoxid ist.

5. Verfahren nach den Ansprüchen 1-4, dadurch **gekennzeichnet**, dass das Aluminiumalkoxid ein Isopropoxid ist, und dass das Dispergiermittel in einer nach der Oberflächenmodifizierung ausgeführten Misch/Dispergierstufe ein Polyacrylsäureester ist.


## Revendications

1. Procédé de modification en surface de matériaux bruts en céramique oxyde et non oxyde ou de mélanges de tels matériaux, utilisé conjointement avec des techniques classiques de formation de matériaux pulvérisés dans lesquelles on fait réagir le matériau brut en céramique pulvérisé avec un alkoxyde métallique en présence d'un diluant organique à faible teneur en eau, après quoi le diluant est évaporé et le matériau brut pulverisé est calciné ou bien l'alkoxyde métallique qui reste est hydrolysé et le matériau brut pulvérisé est séché et calciné, **caractérisé** en ce que l'on disperse et forme le matériau brut pulvérisé ainsi modifié en surface tout en gardant intacte la surface modifée.

2. Procédé selon la revendication 1, **caractérisé** en ce que le point isoélectrique du matériau brut modifié en surface se trouve entre celui du matériau brut de départ et celui de l'oxyde métallique, de l'hydroxyde d'oxyde métallique ou de l'hydroxyde métallique correspondants de l'alkoxyde métallique choisi.

3. Procédé selon les revendications 1 et 2, **caractérisé** en ce que l'alkoxyde métallique est un alkoxyde de silicium ou un alkoxyde d'aluminium.

4. Procédé selon les revendications 1 à 3, **caractérisé** en ce que l'alkoxyde d'aluminium est un isopropoxyde.

5. Procédé selon les revendications 1 à 4, **caractérisé** en ce que l'alkoxyde d'aluminium est un isopropoxyde, et que l'agent dispersant utilisé pendant une étape de mélange/dispersion effectuée après la modification en surface est un polyacrylate.

Fig.1

ZETA POTENTIAL, mV

+50

0

−50

5

10

pH

Fig.2

ZETA POTENTIAL, mV

pH

Fig.3

EP 0 313 572 B1

Fig. 4